# EUROPÄISCHE PATENTSCHRIFT

(11) **EP 3 821 985 B1**
(45) Veröffentlichungstag und Bekanntmachung des Hinweises auf die Patenterteilung: **23.08.2023**
(21) Anmeldenummer: 19209743.4
(22) Anmeldetag: 18.11.2019
(51) Int. Cl.: B05B 1/00

(54) **AGRARSPRITZEN-VENTILEINHEIT, FELDSPRITZENEINRICHTUNG, AGRARE AUSBRINGEINRICHTUNG UND VERFAHREN ZUM BETRIEB EINER AGRARSPRITZEN-VENTILEINHEIT**
AGRICULTURAL SPRAY VALVE UNIT, FIELD SPRAY DEVICE, AGRICULTURAL APPLICATION DEVICE AND METHOD FOR OPERATING AN AGRICULTURAL VALVE UNIT
UNITÉ DE SOUPAPE DE PULVÉRISATION AGRICOLE, DISPOSITIF DE PULVÉRISATION AGRICOLE, DISPOSITIF D'ÉPANDAGE AGRICOLE ET PROCÉDÉ DE FONCTIONNEMENT D'UNE UNITÉ DE SOUPAPE DE PULVÉRISATION AGRICOLE

(43) Veröffentlichungstag der Anmeldung: 19.05.2021
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- CZ-A3- 20 011 996
- DE-A1- 19 948 238
- DE-B3-102013 101 460
- JP-A- 2015 161 210
- RU-C1- 2 666 687
- SE-B- 400 852

## Beschreibung

### TECHNISCHES GEBIET DER ERFINDUNG

Die Erfindung betrifft eine agrare Ausbringeinrichtung. Derartige agrare Ausbringeinrichtungen dienen zum Ausbringen eines Fluids in der Landwirtschaft auf Pflanzen und/oder einen Ackerboden. Bei dem Fluid kann es sich beispielsweise um Wasser, flüssigen Dünger, Pflanzenschutzmittels, ein Insektizid, ein Unkrautvernichtungsmittel oder ein beliebiges anderes Fluid oder Fluidgemisch handeln.

In derartigen agraren Ausbringeinrichtungen wird das agrare Fluid von einem Tank einer oder mehreren verteilt angeordneten Ausbringöffnungen zugeführt, die von Feldspritzen ausgebildet sein können. Oftmals sind mehrere derartige Feldspritzen in Längsrichtung verteilt an einem sich quer zur Fahrtrichtung eines Agrarfahrzeuges erstreckenden Sprühbalken angeordnet. Die agrare Ausbringeinrichtungen weist neben dem Tank und einer Pumpe zur Druckversorgung Sensoren zur Messung von Drücken und/oder Volumenströmen sowie ein Ausbringleitungssystem auf. Das Ausbringleitungssystem verfügt üblicherweise über eine Sammelleitung, von der mehrere Ausbringleitungen abzweigen, die dann zu den Feldspritzen und deren Ausbringöffnungen führen. In den Feldspritzen selbst oder stromaufwärts derselben findet eine Agrarspritzen-Ventileinheit Einsatz, über die individuell für die jeweilige Feldspritze die Ausbringung des Fluids gesteuert oder geregelt werden kann.

Die Erfindung betrifft neben einer derartigen agraren Ausbringeinrichtung auch eine Feldspritzeneinrichtung sowie eine Agrarspritzen-Ventileinheit. Des Weiteren betrifft die Erfindung ein Verfahren zum Betrieb einer Agrarspritzen-Ventileinheit, einer Feldspritzeneinrichtung oder einer agraren Ausbringeinrichtung.

### STAND DER TECHNIK

Eine agrare Ausbringeinrichtung ist aus DE 10 2006 008 612 A1 bekannt. Hier verzweigt eine aus einem Tank mit dem agraren Fluid versorgte Sammelleitung in mehrere Ausbringleitungen, die jeweils einer Teilbreite unter einem Sprühbalken zugeordnet sind. Die Aufteilung des Volumenstroms des agraren Fluids von der Sammelleitung in die Ausbringleitungen erfolgt über in den Ausbringleitungen jeweils angeordnete motorisch betätigbare Drossel- oder Abschaltventile, die von einem Bordcomputer zentral angesteuert werden können. Die Ausbringleitungen sind zusätzlich an eine Rückführleitung zu dem Tank angeschlossen, so dass unabhängig von der Ausbringung des agraren Fluids über die den jeweiligen Teilbreiten zugeordneten Ausbringdüsen das Fluid in einem Kreislauf gefördert werden kann, indem überschüssiges agrares Fluid über die Rückführleitung wieder dem Tank zugeführt wird. In der Sammelleitung einerseits und der Rückführleitung andererseits sind Durchflussmesser angeordnet, deren Messsignale dem Bordcomputer zugeführt werden. Der Bordcomputer ermittelt durch eine Differenzbildung der Messsignale den Durchfluss (der auch als Ausbringrate bezeichnet werden kann) für die Ausbringung des Fluids durch die Ausbringdüsen.

DE 696 25 914 T2 offenbart eine agrare Ausbringeinrichtung, wobei in dieser Druckschrift besonderes Augenmerk der unabhängigen Steuerung der Ausbringung über die einzelnen Ausbringöffnungen der Feldspritzen, hier insbesondere der Sprühtropfengröße und der Zuführrate, gewidmet ist. Die Druckschrift beschreibt Probleme bei einem Sprühen aus einer Ausbringöffnung einer Feldspritze infolge einer Drift der Sprühtropfen, die zu einer Übersprühung führen kann mit einer Vergeudung von agrarem Fluid und einer Gefährdung der Natur oder des Menschen, einer Beschädigung benachbarter Ernte, einer Gesundheitsgefährdung eines Viehbestandes u. ä. Eine Verschärfung dieser Probleme ergibt sich bei einer Vergrößerung der agraren Ausbringeinrichtung, Erweiterung der Sprühbreite, Einsatz der agraren Ausbringeinrichtung an Fahrzeugen mit hohen Geschwindigkeiten, dem Einsatz der agraren Ausbringeinrichtung an einem Flugzeug u. ä. Als bekannt dargestellt wird in der Druckschrift der Einsatz eines Sprühbalkens, an welchem die Feldspritzen mit den Ausbringöffnungen über die Breite verteilt angeordnet sind, mit automatischer Steuerung der Höhe des Sprühbalkens und damit der Feldspritzen über dem Boden. Ebenfalls als bekannt beschrieben wird die Ausgestaltung der agraren Ausbringeinrichtung als elektrisch betätigbares und steuerbares Durchflusssteuersystem, bei welchem den Ausbringöffnungen Magnetventile aufweisende Agrarspritzen-Ventileinrichtungen vorgeordnet sind. Die Magnetventile werden mittels einer Pulsweitenmodulation mit Rechteckimpulsen betätigt, deren Frequenz und Arbeitszyklus oder Tastverhältnis für die Steuerung der Ausbringrate über die als Sprühdüsen ausgebildeten Ausbringöffnungen geändert werden kann. Bei konstantem Bereitstellungsdruck des agraren Fluids soll die volumetrische Durchflussrate veränderbar sein, ohne dass sich eine Tropfengröße oder ein Sprühmuster ändert. Ebenfalls als bekannt beschrieben wird die Ablage von Felddarstellungen mit digitalen Informationen über die verschiedenen Bodentypen in einem rechnergestützten Steuersystem, womit das agrare Fluid, hier Dünger, entsprechend verschiedenen, in einem Feld angetroffenen Bodenbedingungen bemessen und verteilt werden können. Eine Anpassung der Ausbringrate des agraren Fluids an die Fahrzeuggeschwindigkeit kann automatisch erfolgen. Ebenfalls bekannt ist die Steuerung der Ausbringung des agraren Fluids auf Grundlage von Global-Positioning-Systemen (GPS). Die Druckschrift beschreibt ein Sprühfahrzeug mit einer agraren Ausbringeinrichtung, die einen Tank und mehrere Sprühbalken aufweist. Die Sprühbalken verfügen über eine Sammelleitung, in der über einen Druckregler ein Betriebsdruck eingestellt wird. Der Sammelleitung wird das agrare Fluid über eine Pumpe aus einem Tank zugeführt. Im Falle eines zu hohen Drucks wird hier das agrare Fluid über eine Rückführleitung in den Tank zurückgeführt. In der Sammelleitung ist ein verstellbares Drosselventil vorgesehen. Die Durchflussrate und der Druck des agraren Fluids werden durch einen in der Sammelleitung angeordneten Drucksensor überwacht. Die die Ausbringöffnungen aufweisenden Feldspritzen können zur individuellen Steuerung mit unterschiedlichen Drosselventilen verbunden sein, wodurch je nach eingesetzter Düse das agrare Fluid mit einem bestimmten Spektrum der mittleren Tropfengröße ausgegeben werden kann. Über eine zentrale Steuereinheit kann eine unabhängige Steuerung der Durchflussrate und der Tropfengröße für die jeweiligen Düsen erfolgen. Hierbei kommuniziert die zentrale Steuereinheit mit den Magnetventilen der Agrarspritzen-Ventileinheiten über ein Bussystem, wobei auch möglich ist, dass die Feldspritzen interaktiv und vernetzt sind zum Austausch von Daten zwischen diesen und der Steuereinheit. Für einen eingesetzten Typ eines in Serienfertigung hergestellten Magnetventils können Daten hinsichtlich der generalisierten Eigenschaften dieses Typs vom Hersteller geliefert werden. Die mittlere Tropfengröße ist nichtlinear von dem Zuführdruck des agraren Fluids abhängig, wobei die mittlere Tropfengröße mit Abnahme des Drucks abnimmt. Gemäß der Druckschrift soll eine unabhängige Steuerung der Einstellpunkte der Durchflussrate und der Tropfengröße ermöglicht werden durch geeignete Änderungen in den Einstellpunkten der Arbeitszyklen und des Drucks des agraren Fluids, wozu geeignete Tabellen oder funktionale Abhängigkeiten berücksichtigt werden können, die in einer Speichereinheit gespeichert sein können. Ebenfalls vorgeschlagen wird, das tatsächliche Sprühverhalten an einem Einstellpunkt mit einem gewünschten Sprühverhalten zu vergleichen und die Einstellpunkte für die Zuführrate der Sprühflüssigkeit und die Tropfengröße im Bedarfsfall anzupassen.

EP 2 227 949 B2 beschreibt die Problematik, dass einer Ausbringöffnung vorgeordnete Magnetventile einer Agrarspritzen-Ventileinheit in Serienfertigung hergestellt werden, wobei von dem Hersteller Daten hinsichtlich der charakteristischen Eigenschaften des Magnetventils der Agrarspritzen-Ventileinheit, in der das Magnetventil Einsatz findet, verfügbar sind. Diese Daten betreffen aber selektive Messergebnis einer einzigen, aus einer größeren Gruppe von serienmäßig produzierten Agrarspritzen-Ventileinheit herausgegriffenen spezifischen Agrarspritzen-Ventileinheit, die als repräsentativ für sämtliche Serienprodukte oder allenfalls für die gemittelten Eigenschaft mehrerer geprüfter Agrarspritzen-Ventileinheiten angenommen wird. Damit hängt letztendlich die Genauigkeit der Einhaltung des gewünschten Ausbringverhaltens einer Agrarspritzen-Ventileinheit ab von der Fertigungsgenauigkeit derselben bzw. der fertigungsbedingten Abweichung der Agrarspritzen-Ventileinheit von der tatsächlich geprüften Agrarspritzen-Ventileinheit, auf deren Grundlage die Daten vom Hersteller bereitgestellt sind. Soll das Ausbringverhalten innerhalb fest vorgegebener Grenzen vorgebbar sein, bedingt dies enge Toleranzen für die Fertigung der Agrarspritzen-Ventileinheit in einer Serienfertigung. Kommt es tatsächlich zu Abweichungen des Ausbringverhaltens von einem Soll-Ausbringverhalten, kann diesen Abweichungen lediglich dadurch Rechnung getragen werden, dass im Betrieb das tatsächliche Ausbringverhalten mit dem gewünschten Ausbringverhalten verglichen wird und eine aufwendige Nachregelung der Einstellpunkte erfolgt. EP 2 227 949 B2 schlägt vor diesem Hintergrund vor, eine Agrarspritzen-Ventileinheit mit einem darin eingesetzten schwingenden Quarz als Taktgeber u. U. mit geringen Anforderungen an die Fertigungstoleranzen (beispielsweise hinsichtlich der Öffnungs- und Durchlassgeometrien, der Stellwege des Ventils und/oder der Frequenz des Quarzes) herzustellen, womit die Kosten drastisch reduziert werden. Der Agrarspritzen-Ventileinheit wird dann aber eine Kalibriereinheit zugeordnet. Über die Kalibriereinheit kann werkseitig, turnusgemäß in einer Werkstatt oder im Betrieb der Agrarspritzen-Ventileinheit eine für diese Agrarspritzen-Ventileinheit spezifische Kalibrierung derart erfolgen, dass eine Abhängigkeit oder ein Kennfeld ermittelt wird, welches oder welche die Abhängigkeit der unterschiedlichen Ausbringgrößen von Parametern der Pulsmodulation und/oder Betriebs- oder Umgebungsparametern abbildet. Hierdurch kann bei geringen Kosten die Abweichung der Ist-Ausbringung der Agrarspritzen-Ventileinheit von der Soll-Ausbringung reduziert werden, was wiederum zu einer Kostenreduktion infolge der Reduzierung des ausgebrachten agraren Fluids, einer Erhöhung des agraren Ertrags und/oder einer Schonung der Umwelt führen kann.

Die nicht vorveröffentlichte europäische Patentanmeldung mit dem amtlichen Aktenzeichen EP 18 203 920.6 schlägt eine besondere Ausgestaltung einer agraren Ausbringeinrichtung und eines Verfahrens zum Betrieb derselben vor, bei bzw. dem der mittels eines Testbetriebs das Ausbringverhalten ermittelt werden kann und eine Überprüfung erfolgen kann, ob das Ausbringverhalten noch bestimmungsgemäß ist, sowie eine Kalibrierung der Agrarspritzen-Ventileinheiten erfolgen kann.

Agrarspritzen-Ventileinheiten können als direkt gesteuerte Magnetventile ausgebildet sein, bei welchen beispielsweise ein als Ventilteller ausgebildeter Ventilkörper, der in einer Schließstellung zur Anlage an einen Ventilsitz kommt, mit einem elektromagnetischen Aktuator direkt mechanisch verbunden ist. Hierbei sind die elektromagnetischen Aktuatoren mit einer Spule und einem im Inneren der Spule bewegten Anker gebildet, wobei der bewegliche Anker mit dem Ventilkörper gekoppelt ist. Der elektromagnetische Aktuator muss eine Öffnungskraft erzeugen, die abhängig ist von der Größe des Ventiltellers sowie der Druckdifferenz zwischen einer Primärleitung und einer Sekundärleitung der Agrarspritzen-Ventileinheit (vgl. DE 10 2013 101 460 A1).

EP 2 511 783 B1 offenbart eine Agrarspritzen-Ventileinheit, welche als passives Überströmventil ohne elektronische Steuerungsmöglichkeiten ausgebildet ist. Hierbei ist die Größe und Geometrie eines Übertrittsquerschnitts zwischen der Primärleitung und der Sekundärleitung abhängig von der Stellung eines Ventilkörpers. Der Ventilkörper ist in diesem Fall mit einem Wiegekolben gebildet. Der Wiegekolben weist eine erste Kolbenfläche auf, die permanent mit dem Druck in der Primärleitung beaufschlagt ist. Des Weiteren besitzt der Wiegekolben eine entgegengesetzt zu der ersten Kolbenfläche wirkende zweite Kolbenfläche, welche permanent mit dem Druck in Sekundärleitung beaufschlagt ist. Somit ist die Stellung des Ventilkörpers und die Größe und Geometrie des Übertrittquerschnitts von der Druckdifferenz in der Primärleitung und der Sekundärleitung abhängig. Für die Inbetriebnahme einer Agrarspritze liegt in der Sekundärleitung kein Druck an, so dass sich mit einem Druckaufbau in der Primärleitung eine schnelle Öffnung der Agrarspritzen-Ventileinheit ergibt. Kommt es hingegen im Betrieb der Agrarspritze zu einer unerwünschten Verstopfung stromabwärts der Agrarspritzen-Ventileinheit, staut sich das Fluid in der Sekundärleitung auf, womit der die zweite Kolbenfläche beaufschlagende Druck sich dem Druck in der Primärleitung, welcher die erste Kolbenfläche beaufschlagt, annähert. Auf diese Weise kann bei einer Verstopfung automatisch eine Schließung des Agrarspritzen-Überströmventils herbeigeführt werden, um einen weiteren Übertritt von Fluid von der Primärleitung in die Sekundärleitung zu unterbinden.

EP 2 227 949 A1 offenbart den grundsätzlichen Aufbau einer Feldspritzanlage mit dem gesamten fluidischen Kreis und der Anordnung mehrerer Agrarspritzen-Ventileinheiten an einem Sprühbalken. Hier finden Agrarspritzen-Ventileinheiten mit einer pulsweitenmodulierten Steuerung der Bewegung eines Ventilkörpers Einsatz.

EP 2 979 765 B1 offenbart eine Agrarspritzen-Ventileinheit, bei welcher zwischen einer Primärleitung und einer Sekundärleitung ein Ventil angeordnet ist. Das Ventil weist einen Ventilkörper und einen Ventilsitz auf, die in einer Öffnungsstellung des Ventils einen Übertrittsquerschnitt zwischen der Primärleitung und der Sekundärleitung bilden. Der Ventilkörper ist über eine Feder in Richtung einer Schließstellung und in Richtung des Ventilsitzes beaufschlagt. Auf den Ventilkörper wirkt der Druck in der Primärleitung in Öffnungsrichtung. Das Ventil bildet ein Überströmventil, in dem mit einem Überschreiten eines Schwellwerts des Drucks in der Primärleitung der Ventilkörper von dem Ventilsitz weg bewegt wird. Somit wird das Ventil erst geöffnet, wenn mit Aufnahme der Tätigkeit einer Pumpe der Schwellwert des Drucks erreicht ist. Neben dieser passiven Überströmfunktion des Ventils kann der Ventilkörper über einen Haftmagneten in der Schließstellung gehalten werden. Hierbei wird unter einem Haftmagneten ein Elektromagnet verstanden, in welchem keine mechanische Bewegungsumsetzung erfolgt. Vielmehr verfügt der elektrische Haftmagnet über eine Spulenwicklung und einen gegenüber der Spulenwicklung nicht bewegbaren Kern. In der Richtlinie VDE 0580 sind derartige Haftmagnete auch als "Lasthebemagnete" bezeichnet. Einsatz findet hier ein Haftmagnet in Ausbildung als rotationssymmetrischer Topfmagnet. Ein Halten des Ventils mittels des Haftmagneten ist mit einer drastisch reduzierten Leistungsaufnahme gegenüber einem Elektromagneten mit im Inneren angeordneten beweglichen Anker möglich, wobei unter Umständen dennoch hohe Haltekräfte herbeigeführt werden können. Wird mittels des Haftmagneten der Ventilkörper in der Schließstellung gehalten, kann durch den Haftmagneten die Überstromfunktion außer Kraft gesetzt werden, so dass trotz Überschreiten des Schwellwerts des Drucks in der Primärleitung das Ventil die Schließstellung beibehält. Dies soll beispielsweise genutzt werden, um durch Bestromung einzelner Haftmagnete von mehreren Agrarspritzen-Ventileinheiten an einem Sprühbalken eine teilbereiten Abschaltung herbeizuführen oder mit Bestromung sämtlicher Haftmagneten der Agrarspritzen-Ventileinheit temporär das Ausbringen für den gesamten Sprühbalken, beispielsweise bei einer Kurvenfahrt im Randbereich des Feldes, zu unterbinden. Alternativ wird vorgeschlagen, dass der Haftmagnet eine Öffnungsstellung des Ventilkörpers sichert, womit die Überstromfunktion mit Bestromung des Haftmagneten auch ausgelöst werden kann, wenn die Druckdifferenz zwischen dem Druck in der Primärleitung und der Sekundärleitung nicht ausreichend ist, um das Ventil in die Öffnungsstellung zu überführen. Wirkt der Haftmagnet mit einem Anker zusammen, der mit dem Ventilkörper gekoppelt ist, ändert sich je nach Stellung des Ventilkörpers und damit des Abstandes des Ankers von dem Haftmagneten die magnetische Leitfähigkeit, der magnetische Widerstand und die Flussdichte. Bei Beaufschlagung des Haftmagneten mit einer Wechselspannung oder einem Wechselstrom ändern sich damit die Stromverläufe, die Spannung, die Impedanz und/oder eine Phasenverschiebung der elektrischen Beaufschlagung des Haftmagneten. Anhand der physikalischen Gegebenheiten kann dann eine Veränderung umgerechnet werden oder über ein Kennfeld umgewandelt werden in einen Abstand des Ankers von dem Haftmagneten, womit eine Art Sensor geschaffen ist für die Betriebsstellung des Ventilkörpers und damit die Betriebsstellung des Ventils. Hierbei kann der Sensor ein binäres Signal (geschlossen/offen), ein digitales Signal oder auch ein analoges Signal für den Abstand des Ankers von dem Haftmagneten erzeugen. Auf Grundlage der Auswertung des derart ermittelten Abstandes des Ankers von dem Haftmagneten kann dann eine Erkennung eines fehlerhaften Betriebszustandes der Agrarspritze, für welche das Ventil Einsatz findet, erfolgen. Beispielsweise kann ein Einbruch des Drucks in der Primärleitung (insbesondere infolge einer Fehlfunktion einer Pumpe oder einer Leckage in der Zuleitung) detektiert werden. Möglich ist auch, dass über den Sensor eine Verstopfung in der Agrarspritze, insbesondere im Bereich der Sekundärleitung oder im Bereich einer Spritz- oder Ausbringdüse, erkannt wird. Möglich ist auch, dass eine Behinderung einer Bewegung des Ventilkörpers, beispielsweise infolge eines Verschleißes oder eines Fremdkörpers im Führungsbereich des Ventilkörpers oder zwischen dem Ventilsitz und dem Ventilkörper, erkannt wird. Vorgeschlagen wird in EP 2 979 765 B1 des Weiteren, dass ein nicht stationäres elektrisches Testsignal erzeugt wird, mit dem der Haftmagnet beaufschlagt wird, wobei das Testsignal so von einer Steuereinheit vorgegeben wird, dass eine möglichst gute Messung des Abstandes des Ankers von dem Haftmagneten möglich ist. Dieses elektrische Testsignal kann beispielsweise in der Haftstellung des Ankers appliziert werden, in welcher der Anker ohnehin mit einer verhältnismäßig großen Haltekraft an dem Haftmagneten gehalten ist, so dass eine kleine oszillierende Kraft infolge des elektrischen Testsignals nicht so an dem Lösen des Ankers von dem Haftmagneten führt. Möglich ist auch, dass das Testsignal dem ansonsten genutzten elektrischen Beaufschlagungssignal des Haftmagneten überlagert wird, wobei die Amplitude des elektrischen Testsignals kleiner ist als die des elektrischen Beaufschlagungssignals. Alternativ oder zusätzlich wird vorgeschlagen, dass das Testsignal eine derartige Frequenz besitzt, dass zwar das Testsignal einen Fluss durch den Haftmagneten und den Anker bewirkt, welcher abhängig ist von dem Abstand des Ankers von dem Haftmagneten. Allerdings ist infolge der Trägheit des Ankers und des Ventilkörpers das Ventil nicht in der Lage, entsprechend dem hochfrequenten Testsignal und der hierdurch erzeugten hochfrequenten Kraft des Haftmagneten eine signifikante Änderung oder Oszillation der Stellung des Ventilkörpers herbeizuführen.

Die nicht gattungsgemäßen Druckschriften DE 199 48 238 A1 und JP 2015-161210 A betreffen ein Brennstoffeinspritzventil für eine Brennstoffeinspritzanlage einer Brennkraftmaschine, mittels welcher eine Direkteinspritzung von Brennstoff in einen Brennraum der Brennkraftmaschine erfolgt.

### AUFGABE DER ERFINDUNG

Der Erfindung liegt die Aufgabe zugrunde, eine Agrarspritzen-Ventileinheit vorzuschlagen, welche insbesondere hinsichtlich
- der Gewährleistung einer Schließstellung und damit eines Tropfschutzes,
- des elektrischen Energiebedarfs,
- der Öffnungs- und/oder Schließcharakteristik und/oder
- der Aufbringung großer Öffnungskräfte gegen einen wirkenden Druck des Fluids in einer Primärleitung
verbessert ist.

Des Weiteren liegt der Erfindung die Aufgabe zugrunde, eine entsprechend verbesserte Feldspritzeneinrichtung und eine agrare Ausbringeinrichtung mit einer entsprechend verbesserten Agrarspritzen-Ventileinheit vorzuschlagen.

Schließlich liegt der Erfindung die Aufgabe zugrunde, ein Verfahren zum Betrieb einer Agrarspritzen-Ventileinheit, einer Feldspritzeneinrichtung oder einer agraren Ausbringeinrichtung vorzuschlagen, welches zu entsprechenden Verbesserungen führt.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine Agrarspritzen-Ventileinheit, die zur Steuerung (oder Regelung) des Ausbringens eines agraren Fluids Einsatz findet. Die Agrarspritzen-Ventileinheit verfügt über eine mit einer Quelle des Fluids verbindbare Primärleitung und eine zu einer Ausbringöffnung führende Sekundärleitung.

Die Agrarspritzen-Ventileinheit weist darüber hinaus ein Ventil auf. Dieses Ventil ist zwischen der Primärleitung und der Sekundärleitung angeordnet. Das Ventil verfügt über einen Ventilsitz und einen Ventilkörper, der unmittelbar an dem Ventilsitz zur Anlage kommen kann oder einen entsprechenden Ventilteller oder einen anderweitiges Ventilelement an den Ventilsitz anpressen kann. Der Ventilkörper ist über einen Ventilhub H zwischen einer Öffnungsstellung und einer Schließstellung bewegbar. Hierbei verbindet das Ventil in der Öffnungsstellung die Primärleitung mit der Sekundärleitung, während das Ventil in der Schließstellung die Primärleitung gegenüber der Sekundärleitung absperrt. In der Öffnungsstellung kann somit die Ausbringung des Fluids erfolgen, während hingegen in der Schließstellung kein Ausbringen des Fluids erfolgt.

Die Agrarspritzen-Ventileinheit weist einen Elektromagneten auf. Der Elektromagnet verfügt über einen Spuleneinheit und einen Anker. Hierbei besitzt die Spuleneinheit vorzugsweise eine Spule sowie einen Kern. Je nach Bestromung des Elektromagneten kann eine Öffnungs- und/oder Schließkraft erzeugt werden, die auf den Anker wirkt.

Erfindungsgemäß ist der Anker des Elektromagneten über eine Antriebsverbindung mit dem Ventilkörper gekoppelt, so dass die von dem Elektromagneten erzeugte Öffnungs- und/oder Schließkraft von dem Anker über die Antriebsverbindung auf den Ventilkörper übertragen werden kann, womit dann auch eine Herbeiführung oder Änderung der Öffnungs- und/oder Schließstellung je nach Bestromung der Spule der Spuleneinheit möglich ist.

Die Erfindung beruht auf der Erkenntnis, dass herkömmliche Elektromagneten für die Gewährleistung des Ventilhubs H die erforderlichen Öffnungs- und/oder Schließkräfte auch dann erzeugen müssen, wenn der Anker einen Abstand von der Spuleneinheit aufweist, der zumindest dem Ventilhub H entspricht. Der verhältnismäßig große Abstand erfordert dann aber für die Erzeugung der erforderlichen Öffnungs- oder Schließkraft eine Beaufschlagung der Spule mit einem großen Strom, womit der Energieaufwand erhöht wird. Diese Problematik verschärft sich unter Umständen dann, wenn das Ventil mittels einer Schließfeder in die Schließstellung beaufschlagt ist und aus dieser Schließstellung gegen die Wirkung der Schließfeder mittels des Elektromagneten in die Öffnungsstellung überführt werden soll, wenn dann gleichzeitig in der Schließstellung der Abstand des Ankers von der Spuleneinheit maximal ist. Hierbei kann sogar auf den Ventilkörper oder einen Ventilteller der Druck des agraren Fluids in der Primärleitung wirken, womit von dem Elektromagneten für den großen Abstand des Ankers von der Spuleneinheit Öffnungskräfte erzeugt werden müssen, die ausreichend sind, um die von dem Druck des Fluids in der Primärleitung an dem Ventilteller hervorgerufene Fluidkraft und die Schließkraft der Schließfeder zu überwinden. Die zu überwindende Fluidkraft ist aber umso größer je größer der Ventilquerschnitt und damit die Fläche, auf welche der Druck des Fluids in der Primärleitung wirkt, ist, wobei große Ventilquerschnitte gewünscht sind, um große Durchflussmengen, kleine Drosselwirkungen und schnelle Änderungen des Ausbringverhaltens gewährleisten zu können.

Die Erfindung schlägt vor, dass der Anker des Elektromagneten zweiteilig ausgebildet wird, in dem dieser einen ersten Teilanker und einen zweiten Teilanker aufweist. Der zweite Teilanker ist dabei antriebsfest mit dem Ventilkörper gekoppelt, so dass die Bewegung des zweiten Teilankers unmittelbar mit der Öffnungs- oder Schließbewegung des Ventils korreliert. Hingegen ist der erste Teilanker relativ gegenüber dem zweiten Teilanker verschieblich. Der erste Teilanker ist dabei nicht unmittelbar antriebsfest mit dem Ventilkörper gekoppelt, so dass eine Bewegung des ersten Teilankers möglich ist, ohne dass dies unmittelbar mit einer Öffnungs- oder Schließbewegung des Ventils verbunden ist. Allerdings ist der erste Teilanker lediglich bis zum Erreichen einer Begrenzung relativ gegenüber dem zweiten Teilanker verschieblich. Erfindungsgemäß können die Teilanker in einem Teilankerhub H₂ gemeinsam bewegt werden und in mindestens einem anderen Teilankerhub H₁, H₃ relativ zueinander bewegt werden.

Erfindungsgemäß wird die zweiteilige Ausgestaltung des Ankers und die relative Bewegung der Teilanker bis zum Erreichen einer Begrenzung dazu genutzt, dass in der Schließstellung, in der zunächst beide Teilanker einen maximalen Abstand von der Spuleneinheit aufweisen, der erste Teilanker (unabhängig von dem zweiten Teilanker und dem Ventilkörper) in einem Leerhub in Richtung der Spuleneinheit bewegt werden kann, bis die Begrenzung erreicht ist. Mit dem Erreichen der Begrenzung hat dann aber der erste Teilanker einen Abstand von der Spuleneinheit erreicht, der verringert ist und ermöglicht, dass auch für verhältnismäßig kleine Ströme in der Spule Öffnungskräfte auf den ersten Teilanker ausgeübt werden können. Diese Öffnungskräfte können dann genutzt werden, um den ersten Teilanker und den zweiten Teilanker (der dann beabstandet von dem ersten Teilanker angeordnet ist und über die Begrenzung mitgenommen wird) und damit den Ventilkörper von der Schließstellung in eine erste Öffnungsstellung zu bewegen. In der ersten Öffnungsstellung hat der erste Teilanker den minimalen Abstand von der Spuleneinheit erreicht oder der erste Teilanker liegt sogar an der Spuleneinheit an, während der zweite Teilanker noch beabstandet von dem ersten Teilanker angeordnet ist. Während dieser Teilöffnungsbewegung von der Schließstellung in die erste Öffnungsstellung können auch die auf den Ventilkörper oder einen Ventilteller ausgeübten Fluidkräfte überwunden werden. Der Leerhub wird hier auch als Teilankerhub H₁ bezeichnet, während die gemeinsame Bewegung der beiden Teilanker von der Schließstellung in die erste Öffnungsstellung auch als Teilankerhub H₂ bezeichnet wird. Ist die erste Öffnungsstellung erreicht, kann in einem weiteren Teilankerhub H₃ eine weitere Öffnungsbewegung in eine zweite Öffnungsstellung erzeugt werden, indem der erste Teilanker seine Stellung benachbart oder anliegend an der Spuleneinheit beibehält, während der zweite Teilanker relativ zu dem ersten Teilanker bewegt wird, nämlich in Richtung der Spuleneinheit bewegt wird unter Verringerung des Abstands der beiden Teilanker. Da in der ersten Öffnungsstellung das Ventil bereits teilweise geöffnet ist, ist an dem Ventilkörper oder Ventilteller bereits ein Druckausgleich erfolgt, so dass allenfalls eine verringerte Fluidkraft für diesen Teilankerhub H₃ mittels des Elektromagneten zu überwinden ist. Letzten Endes führt die erfindungsgemäße Ausgestaltung dazu, dass die Öffnungsbewegung mit einer kleineren Bestromung des Elektromagneten herbeigeführt werden kann als dies bei entsprechender Ausgestaltung mit einem einteiligen Anker der Fall ist.

Im Rahmen der Erfindung kann eine Herbeiführung der unterschiedlichen Teilankerhübe mit einer konstanten Bestromung der Spule erfolgen oder auch mit einer beliebig gesteuerten oder geregelten Bestromung der Spule erfolgen, wobei in den einzelnen Teilankerhüben H₁, H₂, H₃ gleiche oder unterschiedliche Bestromungen (mit konstantem oder veränderlichem Niveau) erfolgen können.

Vorzugsweise entspricht die Summe der Teilventilhübe H₂, H₃ dem Ventilhub H des Ventilkörpers.

Die Verbindung der Teilanker und die Gewährleistung der Relativbewegung der Teilanker zueinander kann über eine beliebige Führung erfolgen. Vorzugsweise findet die Verbindung der Teilanker über eine (die Begrenzung aufweisende) Linearführung Einsatz.

Auch für die Bereitstellung der Begrenzung der Relativbewegung der Teilanker gibt es im Rahmen der Erfindung vielfältige Möglichkeiten. Für einen Vorschlag der Erfindung wird die Begrenzung durch einen Anschlag bereitgestellt.

Um lediglich einige die Erfindung nicht beschränkende Beispiele zu nennen, kann ein Teilanker mindestens einen Führungsfortsatz, insbesondere einen Führungsbolzen, aufweisen, welcher sich durch eine Führungsausnehmung, insbesondere Führungsbohrung, des anderen Teilankers hindurcherstreckt und in dem auskragenden freien Endbereich einen Anschlag, beispielsweise eine Verdickung, einen Sicherungsring u. ä., aufweisen, so dass der letztgenannte Teilanker entlang des Führungsfortsatzes zwischen dem Anschlag und dem erstgenannten Teilanker verschieblich ist.

Für einen besonderen Vorschlag der Erfindung weist der erste Teilanker einen U-förmigen Querschnitt auf. In diesem Fall kann der zweite Teilanker zwischen den Seitenschenkeln des U-förmigen Querschnitts des ersten Teilankers aufgenommen und in einigen Fällen auch geführt sein. Für einen besonderen Vorschlag der Erfindung ist dabei der erste Teilanker rotationssymmetrisch ausgebildet, so dass der erste Teilanker topfförmig ausgebildet ist. In diesem Fall kann der zweite Teilanker kreisscheibenförmig ausgebildet sein. Die Verwendung eines U-förmigen Querschnitts des ersten Teilankers und die Anordnung des zweiten Teilankers in dem U-förmigen Querschnitt stellt eine einfache und kompakte Ausgestaltung des zweiteiligen Ankers dar. Unter Umständen kann auch der magnetische Fluss zwischen den beiden Teilankern dadurch verbessert werden, dass auch bei Beabstandung des ersten Teilankers von dem zweiten Teilanker ein magnetischer Fluss über die Seitenschenkel des U-förmigen Querschnitts ohne großen Luftspalt zwischen den beiden Teilankern gewährleistet werden kann.

Für einen Vorschlag der Erfindung wird für diese Ausgestaltung die Begrenzung oder der Anschlag von dem Seitenschenkel des U-förmigen Querschnitts des ersten Teilankers ausgebildet oder die Begrenzung oder der Anschlag ist an dem Seitenschenkel des U-förmigen Querschnitts des ersten Teilankers gehalten. Um lediglich ein die Erfindung nicht beschränkendes Beispiel zu nennen, kann beispielsweise die Begrenzung oder der Anschlag gebildet sein von einem Sicherungsring, der aufgenommen ist in einer Ausnehmung oder Nut des Seitenschenkels des U-förmigen Querschnitts, also einer Umfangsnut des hülsenartigen Teilbereichs des topfförmigen ersten Teilankers.

Grundsätzlich kann in der Agrarspritzen-Ventileinheit eine Erzeugung sowohl von Öffnungs- als auch von Schließkräften mittels des Elektromagneten erfolgen. Möglich ist auch, dass mittels des Elektromagneten lediglich entweder eine Öffnungskraft oder eine Schließkraft erzeugt werden kann, während dann die andere Kraft mittels einer Schließfeder bzw. Öffnungsfeder herbeigeführt wird, gegen welche der Elektromagnet dann arbeiten muss.

Möglich ist alternativ oder kumulativ, dass die Öffnungsbewegung des Ventils erfolgt gegen die Fluidkraft infolge des Drucks des Fluids in der Primärleitung oder mit der Fluidkraft.

Für einen besonderen Vorschlag der Erfindung ist der Ventilkörper des Ventils über eine Schließfeder in Schließrichtung des Ventilsitzes in die Schließstellung beaufschlagt. In diesem Fall ist der Ventilkörper des Ventils (und damit das Ventil selbst) durch eine Bestromung des Elektromagneten von der Schließstellung in die Öffnungsstellung überführbar. Vorzugsweise erfolgt in diesem Fall die Öffnungsbewegung entgegen der Fluidkraft infolge des Drucks des Fluids in der Primärleitung.

Für die Dimensionierung der Teilanker gibt es vielfältige Möglichkeiten. Hierbei ist vorzugsweise dafür Sorge zu tragen, dass mit der Aufnahme der Bestromung des Elektromagneten tatsächlich in einem Teilankerhub H₁ nicht eine gemeinsame Bewegung der beiden Teilanker erfolgt, sondern lediglich die Bewegung des ersten Teilankers erfolgt. Für eine besondere Ausgestaltung der Erfindung weisen die Teilanker jeweils eine Teilankerplatte auf, die sich parallel zueinander und quer zur Bewegungsrichtung der Teilanker erstrecken. Für das genannte Beispiel, bei dem der erste Teilanker topfartig ausgebildet ist, bildet die Teilankerplatte die Bodenplatte des "Topfes", während für den zweiten Teilanker die Teilankerplatte eine Kreisplatte ist. Erfindungsgemäß wird vorgeschlagen, dass die Dicke der der Spuleneinheit zugewandten ersten Teilankerplatte 10% bis 40 % (insbesondere 15 % bis 30 % oder 15% bis 25 % oder 18 % bis 23 %) der Dicke der der Spuleneinheit abgewandten zweiten Teilankerplatte beträgt. Diese Dimensionierung der beiden Teilanker hat sich als vorteilhaft hinsichtlich der Gewährleistung der Öffnungs- und Schließcharakteristik herausgestellt.

Für eine erfindungsgemäße Dimensionierung liegen die beiden Teilanker in der Schließstellung des Ventils unmittelbar aneinander an. In der Schließstellung hat der erste Teilanker, der auf der der Spuleneinheit zugewandten Seite angeordnet ist, einen Ankerabstand A von der Spuleneinheit. Die Begrenzung gibt ein begrenztes Verschiebespiel B für eine begrenzte Relativverschiebung des zweiten Teilankers gegenüber dem ersten Teilanker vor. Für diese Dimensionierung ist das begrenzte Verschiebespiel B kleiner als der Ankerabstand A. Hierbei bezeichnet der Ankerabstand A den Abstand des ersten Teilankers in der Schließstellung von dem Abstand der Spuleneinheit in der am weitesten der Spuleneinheit angenäherten Stellung des ersten Teilankers. Für den Fall, dass der erste Teilanker an der Spuleneinheit anliegt, entspricht der Ankerabstand A der Distanz der Stirnseite der Spuleneinheit von dem ersten Teilanker in der Schließstellung. Das Verschiebespiel B entspricht dabei dem Teilankerhub H₁, während die Differenz des Ankerabstands A und des Verschiebespiels B dem Teilankerhub H₂ und damit dem Teilöffnungshub des Ventilkörpers von der Schließstellung in die erste Öffnungsstellung entspricht.

Vorzugsweise beträgt der begrenzte Verschiebe-Freiheitsgras B mindestens 70 % (oder sogar mindestens 80 %, mindestens 90 % oder mindestens 95 %) des Ankerabstands A.

Vorzugsweise entspricht der Ankerabstand A dem Ventilhub H.

Für die Ausgestaltung des Elektromagneten gibt es vielfältige Möglichkeiten. Für eine erfindungsgemäße Agrarspritzen-Ventileinheit ist der Elektromagnet ein Haftmagnet. Unter einem Haftmagneten wird ein Elektromagnet verstanden, der eine gegenüber der Spulenwicklung nicht bewegbaren Kern aufweist. Insbesondere handelt es sich um einen Haftmagneten entsprechend der Richtlinie VDE 0580, die in dieser Richtlinie auch als "Lasthebemagnete" bezeichnet sind. Derartige Haftmagneten ermöglichen eine Aufrechterhaltung einer Haftstellung mit einer drastisch reduzierten Leistungsaufnahme gegenüber einem Elektromagneten mit im Inneren angeordnetem beweglichem Kern, wobei trotz der drastisch reduzierten Leistungsaufnahme dennoch unter Umständen sehr hohe Haltekräfte herbeigeführt werden können. Erfindungsgemäß kann durch die zweiteilige Ausgestaltung des Ankers die Reduzierung der Leistungsaufnahme in der Abstellung doppelt genutzt werden:
- Ist die erste Öffnungsstellung nach dem Durchlaufen des Teilankerhubes H₁ erreicht, liegt der erste Teilanker an dem Haftmagneten an. Wie zuvor erwähnt kann zusätzlich ein besserte Fluss über die Seitenschenkel bzw. den Hülsenbereich des ersten Teilankers zu dem zweiten Teilanker gewährleistet werden.
- In der zweiten Öffnungsstellung liegen beide Teilanker an dem Haftmagneten an, sodass die zweite Öffnungsstellung mit reduzierter Leistungsaufnahme aufrechterhalten werden kann.

Grundsätzlich kann die Agrarspritzen-Ventileinheit als Proportionalventil ausgebildet sein, bei welchem je nach Ausmaß der Öffnung des Ventils unterschiedliche Öffnungsquerschnitte bereitgestellt werden. Möglich sind auch andere Ausgestaltungen der Agrarspritzen-Ventileinheit und der Ansteuerung der Spule. Für einen besonderen Vorschlag der Erfindung weist die Agrarspritzen-Ventileinheit (oder eine extern von der Agrarspritzen-Ventileinheit angeordnete Einrichtung) eine Steuereinrichtung mit Steuerlogik auf, die den Elektromagneten der Agrarspritzen-Ventileinheit zur Herbeiführung einer Pulsweitenmodulation ansteuert. Je nach dem ausgesteuerten Tastverhältnis oder Duty-Cycle kann damit der Durchfluss des agraren Fluids durch die Agrarspritzen-Ventileinheit und damit die Ausbringung des agraren Fluids gesteuert werden.

Eine weitere Lösung der der Erfindung zugrunde liegenden Aufgabe besteht in einer Feldspritzeneinrichtung mit einer Agrarspritzen-Ventileinheit, wie diese zuvor erläutert ist. Zusätzlich zu der Agrarspritzen-Ventileinheit kann die Feldspritzeneinrichtung weitere beliebige fluidische Bauelemente wie Drosseln, Ventile, Überströmventile u. ä. aufweisen und/oder eine konstante oder verstellbare Düse sowie die Ausbringöffnung aufweisen. Die Feldspritzeneinrichtung weist dabei vorzugsweise auch eine Befestigungseinrichtung für die Befestigung der Feldspritzeneinrichtung an dem Fahrzeug oder beispielsweise einem Sprühbalken des Fahrzeugs auf.

Eine weitere Lösung der der Erfindung zugrunde liegenden Aufgabe ist gegeben durch eine agrare Ausbringeinrichtung, wie diese grundsätzlich für die agraren Ausbringeinrichtungen gemäß dem eingangs genannten Stand der Technik bekannt sind. Allerdings weist die erfindungsgemäße agrare Ausbringeinrichtung mehrere Feldspritzeneinrichtungen mit den zuvor erläuterten Agrarspritzen-Ventileinheiten auf.

Eine weitere Lösung der der Erfindung zugrunde liegenden Aufgabe ist gegeben durch ein Verfahren zum Betrieb einer Agrarspritzen-Ventileinheit, zum Betrieb einer Feldspritzeneinrichtung oder zum Betrieb einer agraren Ausbringeinrichtung. In diesem Verfahren wird zunächst der Ventilkörper durch die Schließfeder in die Schließstellung beaufschlagt. Ist dann eine temporäre oder permanente Öffnung des Ventils gewünscht, was auch im Zuge einer Pulsweitenmodulation erfolgen kann, wird in dem erfindungsgemäßen Verfahren der Elektromagnet bestromt. Die Bestromung ist hier in drei zeitlich unterschiedliche Bestromungsphasen unterteilt, in denen die Bestromung unverändert sein kann oder infolge einer Steuerung oder Regelung auch unterschiedlich sein kann:
- In einer ersten Bestromungsphase wird der erste Teilanker über das Verschiebespiel B mit dem Teilankerhub H₁ in Richtung der Spuleneinheit bewegt. Während dieser Bewegung wird der zweite Teilanker und damit der Ventilkörper nicht mitbewegt, was auch als Leerhub bezeichnet werden kann. Somit verändert sich der Abstand der Teilanker während der ersten Bestromungsphase von Null auf einen Abstand, der dem Verschiebefreiheitsgrad B entspricht. Während dieser Vergrößerung des Abstands bleibt aber weiterhin das Ventil in der Schließstellung. Am Ende der ersten Bestromungsphase wird die Begrenzung erreicht, womit eine Kopplung der Bewegung der beiden Teilanker erfolgt.
- Somit werden in der anschließenden zweiten Bestromungsphase die beiden Teilanker über den Teilankerhub H₂ gemeinsam bewegt. Während dieser Bewegung haben die beiden Teilanker einen konstanten Abstand voneinander, der dem Verschiebespiel B entspricht. Findet ein topfartiger erster Teilanker Einsatz, ist dieser Abstand zwischen den beiden Teilankerplatten realisiert. Während der zweiten Bestromungsphase wird das Ventil von der Schließstellung in die erste Öffnungsstellung überführt. Am Ende der zweiten Bestromungsphase hat der erste Teilanker den minimalen Abstand von der Spuleneinheit erreicht. Möglich ist, dass am Ende der zweiten Bestromungsphase der erste Teilanker an die Spuleneinheit zur Anlage kommt.
- Da sich dann der erste Teilanker nicht weiter bewegen kann, wird in einer dritten Bestromungsphase in einem Teilankerhub H₃ der Abstand der beiden Teilanker bei ruhendem ersten Teilanker durch die Bewegung des zweiten Teilankers (und damit des Spulenkörpers) in Richtung der Spuleneinheit von einem anfänglichen Abstand, der dem Verschiebespiel B entspricht, auf Null reduziert. Am Ende der dritten Bestromungsphase können dann beide Teilanker aneinander anliegen und an der Spuleneinheit anliegen. Durch die Reduzierung des Abstands in der dritten Bestromungsphase wird das Ventil von der ersten Öffnungsstellung in eine zweite (erweiterte) Öffnungsstellung überführt.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert einen Teil einer agraren Ausbringeinrichtung mit Feldspritzeneinrichtungen, welche jeweils eine Agrarspritzen-Ventileinheit aufweisen.
- **Fig. 2**: zeigt einen Schnitt durch eine Agrarspritzen-Ventileinheit, die sich in einer Schließstellung befindet.
- **Fig. 3**: zeigt einen Schnitt durch die Agrarspritzen-Ventileinheit gemäß Fig. 2, die sich in einer ersten Öffnungsstellung befindet.
- **Fig. 4**: zeigt einen Schnitt durch die Agrarspritzen-Ventileinheit gemäß Fig. 2 und 3, die sich in einer zweiten Öffnungsstellung befindet.
- **Fig. 5**: zeigt ein Verfahren zum Betrieb einer Agrarspritzen-Ventileinheit, einer Feldspritzeneinrichtung oder einer agraren Ausbringeinrichtung.

### FIGURENBESCHREIBUNG

In den Figuren sind teilweise Bauelemente, die sich hinsichtlich der Geometrie, der konstruktiven Gestaltung und/oder der Funktion entsprechen oder ähneln, mit denselben Bezugsnummern gekennzeichnet, wobei diese dann zur Unterscheidung mit einem zusätzlichen Buchstaben a, b, ... gekennzeichnet sein können. In der Beschreibung wird auf diese Bauelemente dann mit oder ohne den ergänzenden Buchstaben a, b, ... Bezug genommen.

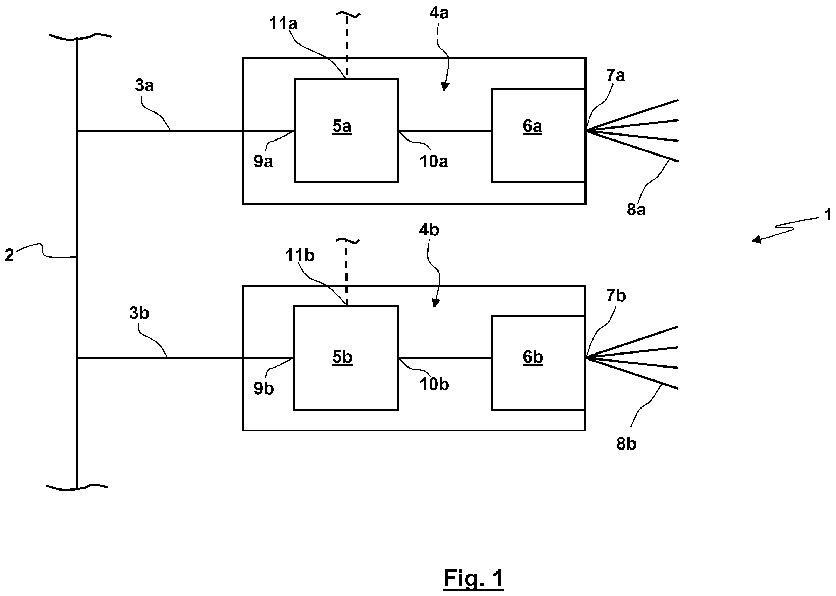

**Fig. 1** zeigt stark schematisch eine agrare Ausbringeinrichtung 1. Die agrate Ausbringeinrichtung 1 verfügt über ein Sammelleitung 2. Die Sammelleitung 2 wird auf hier nicht näher dargestellte Weise mit einem agraren Fluid mit einem vorbestimmten Druck und einem vorbestimmten oder ausreichenden Volumenstrom versorgt. Die Sammelleitung 2 verzweigt in mehrere parallele Ausbringleitungen 3a, 3b, ... Die Ausbringleitungen 3 führen jeweils zu einer zugeordneten Feldspritzeneinrichtung 4. In der Feldspritzeneinrichtung 4 wird das Fluid aus der Ausbringleitung 3 über eine Agrarspritzen-Ventileinheit 5 einer Düse 6 zugeführt. Die Düse 6 bildet eine Ausbringöffnung 7 aus. Aus der Ausbringöffnung 7 tritt in einer Öffnungsstellung der Agrarspritzen-Ventilventileinheit 5 ein Sprühkegel 8 des agraren Fluids aus. In der Feldspritzeneinrichtung 4 können weitere Bauelemente wie fluidische Ventile oder fluidische Komponenten, elektronische Steuereinheiten u. ä. angeordnet sein. Die Agrarspritzen-Ventileinheit 5 verfügt über einen Primärleitungs-Eingangsanschluss 9 und einen Sekundärleitungs-Ausgangsanschluss 10. Des Weiteren verfügt die Agrarspritzen-Ventileinheit 5 über einen elektronischen Steueranschluss und/oder Leistungsversorgungsanschluss 11.

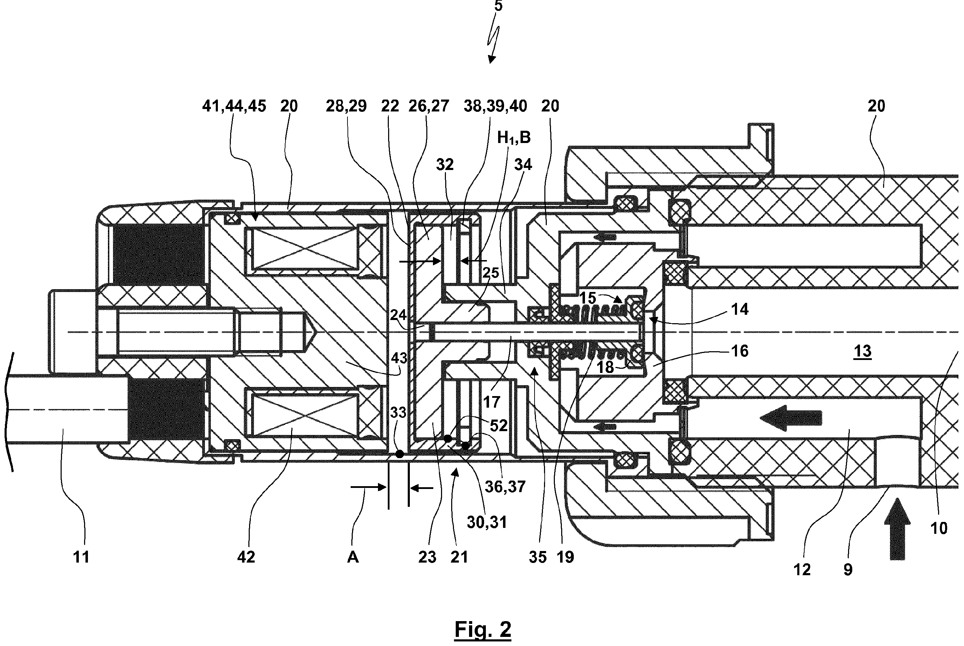

**Fig. 2** zeigt eine Agrarspritzen-Ventileinheit 5 in weiterer konstruktiver Ausgestaltung. Die Agrarspritzen-Ventileinheit 5 verfügt über eine Primärleitung 12, die an den Primärleitungs-Eingangsanschluss 9 angeschlossen ist und in der das Fluid mit dem Druck in der Ausbringleitung 3 ansteht. Des Weiteren verfügt die Agrarspritzen-Ventileinheit 5 über eine Sekundärleitung 13, die mit dem Sekundärleitungs-Ausgangsanschluss 10 verbunden ist und über diesen mit der Düse 6 und der Ausbringöffnung 7 verbunden ist.

Die Primärleitung 12 ist über ein Ventil 14 mit der Sekundärleitung 13 verbunden. Das Ventil 14 ist in Bauweise als Sitzventil ausgebildet. Das Ventil 14 verfügt über einen Ventilkörper 15, der in der Schließstellung gemäß Fig. 2 unter Abdichtung an einen Ventilsitz 16 gepresst werden kann, womit eine Schließstellung des Ventils 14 gebildet ist. Mit Bewegung des Ventilkörpers 15 von dem Ventilsitz 16 weg kann zwischen dem Ventilkörper 15 und dem Ventilsitz 16 ein Übertrittsquerschnitt geschaffen werden, der die Primärleitung 12 mit der Sekundärleitung 13 verbindet, womit sich das Ventil 14 in einer Öffnungsstellung befindet. Für das dargestellte Ausführungsbeispiel ist der Ventilkörper 15 mit einer Ventilkörperstange 17 und einem fest mit der Ventilkörperstange 17 verbundenen Ventilteller 18 ausgebildet, der mit dem Ventilsitz 16 abdichtend in Wechselwirkung treten kann. Der Ventilkörper 15 wird über eine vorgespannte Schließfeder 19 gegen den Ventilsitz 16 gedrückt. Hierzu ist ein Federfußpunkt der Schließfeder 19 an einem Gehäuse 20 der Agrarspritzen-Ventileinheit 5 abgestützt, während der andere Federfußpunkt der Schließfeder 19 an dem Ventilkörper 15, hier dem Ventilteller 18, abgestützt ist.

In dem dem Ventilsitz 16 und dem Ventilteller 18 abgewandten Endbereich ist die Ventilkörperstange 17 mit einem Anker 21 verbunden. Der Anker 21 ist zweiteilig ausgebildet mit einem ersten Teilanker 22 und einem zweiten Teilanker 23. Der zweite Teilanker 23 ist fest mit dem Ventilkörper verbunden, was für das dargestellte Ausführungsbeispiel dadurch erfolgt, dass die Ventilkörperstange 17 in einer Bohrung 24 des zweiten Teilankers 23 aufgenommen ist mit einer Befestigung über eine Presspassung, wobei auch andere Möglichkeiten hinsichtlich einer Befestigung des Ventilkörpers 15 an dem zweiten Teilanker 23 möglich sind.

Der zweite Teilanker 23 ist in dem dargestellten Querschnitt entsprechend einem liegenden T ausgebildet. Die Bohrung 24 für die Aufnahme der Ventilkörperstange 17 erstreckt sich durchgehend durch den Vertikalschenkel 25 des T. Der Horizontalschenkel 26 des T bildet eine Teilankerplatte 27 des zweiten Teilankers 23.

Der erste Teilanker 22 verfügt über einen Querschnitt entsprechend einem liegenden U. Hierbei bildet der Grundschenkel 28 des U eine Teilankerplatte 29 des ersten Teilankers 22, während die Seitenschenkel 30 des U eine Hülse 31 des ersten Teilankers 22 bilden.

Vorzugsweise sind die Teilanker 22, 23 rotationssymmetrisch ausgebildet, so dass der erste Teilanker 22 topfartig ausgebildet ist und die Teilankerplatte 27 des Teilankers 23 kreisplattenförmig ausgebildet ist. Die Teilanker 22, 23 sind dabei koaxial zueinander angeordnet, wobei sich der zweite Teilanker 23 (zumindest teilweise) in einem zwischen den Seitenschenkeln 30 bzw. im Inneren der Hülse 31 ausgebildeten Innenraum 32 befindet.

Der erste Teilanker 22 ist mit den Außenflächen der Seitenschenkel 30 bzw. der Hülse 31 geführt in einer Ausnehmung oder Bohrung 33 des Gehäuses 20 und kann eine gleitende Relativbewegung gegenüber dem Gehäuse 20 ausführen. Der zweite Teilanker 23 kann mit der Mantelfläche der Teilankerplatte 29 gegenüber der Innenfläche 52 der Seitenschenkel 30 bzw. der Hülse 31 geführt sein, mit einer Mantelfläche des Vertikalschenkels 25 in einer Führungshülse 34 des Gehäuses 20 geführt sein und/oder über eine Führung 35 des Ventilkörpers 15 gegenüber dem Gehäuse 20 geführt sein.

Die Seitenschenkel 30 bzw. die Hülse 31 verfügen/verfügt in der Innenfläche 52 über eine Ausnehmung 36 oder Umfangsnut 37, in der ein Anschlag, hier ein Sicherungsring 39, angeordnet ist. Der zweite Teilanker 23 ist gegenüber der Relativstellung in Fig. 2, in der der zweite Teilanker 23 mit seiner Teilankerplatte 27 an der Teilankerplatte 29 des ersten Teilankers 27 anliegt, relativ mit einem Teilventilhub H₁ bewegbar, wobei H₁ vorgegeben ist über das Verschiebespiel B, das dem Abstand des Anschlags 38 des Sicherungsrings 39 von der zugewandten Stirnseite des zweiten Teilankers 23, hier der zugewandten Stirnseite der Teilankerplatte 27, entspricht. Entfernt sich die Teilankerplatte 27 um den Teilventilhub H₁ von der Teilankerplatte 29, erreicht die Teilankerplatte 27 den Anschlag 38 bzw. den Sicherungsring 39, so dass der Anschlag 38 oder der Sicherungsring eine Begrenzung 40 für den Teilventilhub H₁ bilden.

Die Agrarspritzen-Ventileinheit 5 verfügt darüber hinaus über eine Spuleneinheit 41. Die Spuleneinheit 41 verfügt über eine Spule 42 und einen Kern 43, womit ein Elektromagnet 44 gebildet ist. Vorzugsweise ist der Kern 43 nicht verschieblich, womit der Elektromagnet 44 als Haftmagnet 45 ausgebildet ist. Die Spule 42 der Spuleneinheit 41 kann über den Steueranschluss und/oder Leistungsversorgungsanschluss 11 bestromt werden zur Herbeiführung einer Öffnungs- und/oder Schließbewegung des Ventils 14 und zum Halten des Ventils 14 in einer einmal erreichten (Teil-) Öffnungsstellung.

In der Schließstellung der Agrarspritzen-Ventileinheit 5 gemäß Fig. 2 befindet sich eine Stirnseite des ersten Teilankers 22, hier eine Stirnseite der Teilankerplatte 27, in einem Ankerabstand A von einer Stirnseite der Spuleneinheit 41, insbesondere einer Stirnseite eines Kerns 43 derselben.

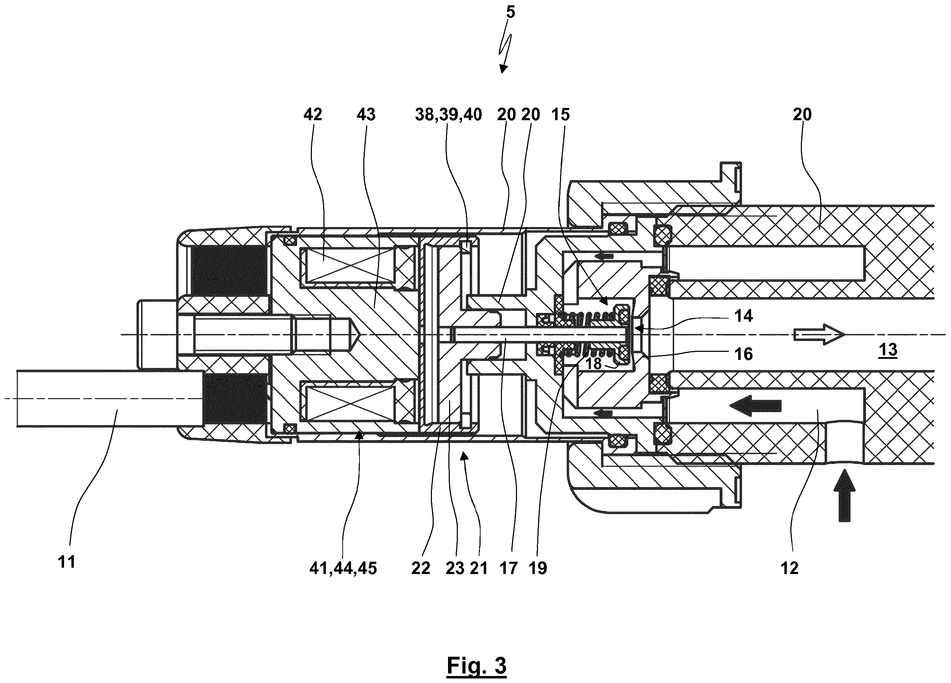

**Fig. 3** zeigt die Agrarspritzen-Ventileinheit 5 mit dem Erreichen einer ersten Öffnungsstellung des Ventils 14, in welcher ein verminderter Übertrittsquerschnitt zwischen der Primärleitung 12 und der Sekundärleitung 13 geschaffen ist, so dass ein begrenzter Übertritt von Fluid von der Primärleitung 12 in die Sekundärleitung 13 erfolgen kann und bereits ein Druckausgleich hinsichtlich des Ventilkörpers 15 stattfinden kann.

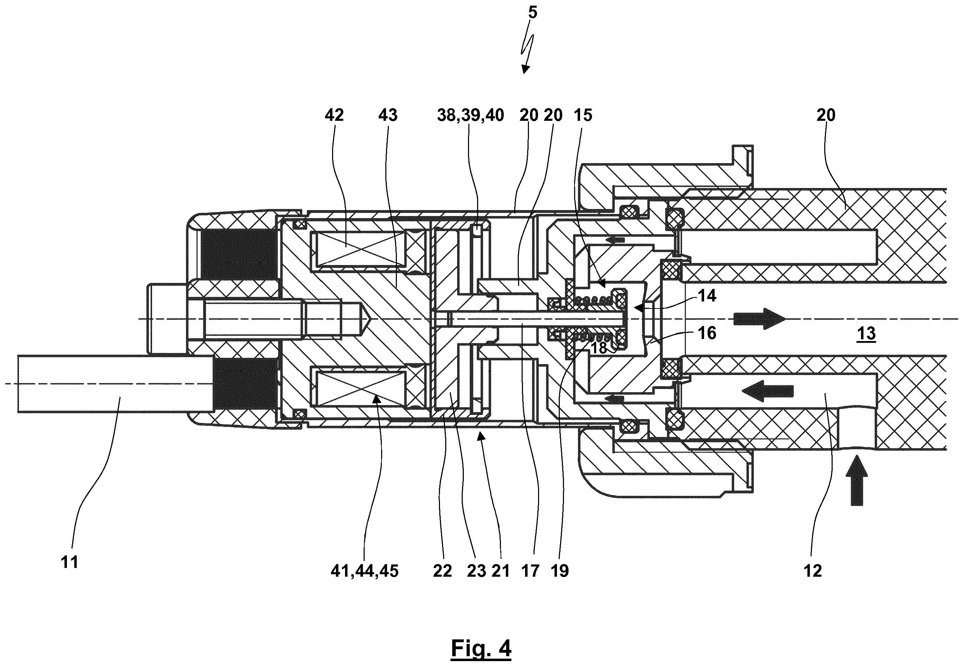

**Fig. 4** zeigt die Agrarspritzen-Ventileinheit 5 in einer zweiten Öffnungsstellung, in welcher ein vergrößerter Übertrittsquerschnitt zwischen dem Ventilkörper 15 und dem Ventilsitz 16 geschaffen ist, so dass ein vergrößerter und vollständiger Übertritt von Fluid von der Primärleitung 12 zu der Sekundärleitung 13 möglich ist.

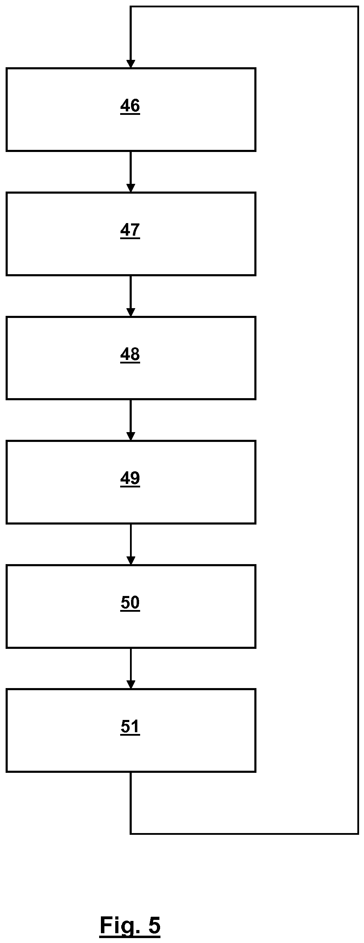

Ein Verfahren zum Betrieb der Agrarspritzen-Ventileinheit 5 wird im Folgenden anhand des schematischen Ablaufplans gemäß **Fig. 5** erläutert, wobei Bezug genommen wird auf die unterschiedlichen Ventilstellungen in Fig. 2 bis 4:
In einem Verfahrensschritt 46 befindet sich die Agrarspritzen-Ventileinheit 5 in der Schließstellung gemäß Fig. 2. In der Schließstellung liegen die Teilanker 22, 23 aneinander an und der erste Teilanker 22 ist mit dem Ankerabstand A von der Spuleneinheit 41 beabstandet. Der Ventilkörper 15 wird mit dem Ventilteller 18 gegen den Ventilsitz 16 gepresst, womit das Ventil 14 geschlossen ist. Die zwischen dem Ventilteller 18 und dem Ventilsitz 16 wirkende Kontakt-Dichtkraft wird einerseits hervorgerufen durch die vorgespannte Schließfeder 19. Steht in der Primärleitung 12 Druck an, wirkt der Druck in der Primärleitung auch auf den Ventilkörper 15 in Schließrichtung. Diese Fluidkraft erhöht somit die Anpressung des Ventiltellers 18 an den Ventilsitz 16. Da in der Sekundärleitung 13 atmosphärischer Druck wirkt, kann diese Fluidkraft nicht ausgeglichen werden durch eine Fluidkraft, die das Fluid in der Sekundärleitung 13 auf die Stirnseite des Ventilkörpers 15, die durch den Ventilsitz 16 begrenzt ist, ausübt.

In einem Verfahrensschritt 47 wird dann die Spule 12 bestromt.

Infolge dieser Bestromung wird in einem Verfahrensschritt 48 ein Leerhub oder Teilankerhub H₁ ausgeführt. In dem Teilankerhub H₁ wird der erste Teilanker 22 in Richtung der Spuleneinheit 41 bewegt, so dass sich der Abstand des ersten Teilankers 22 von dem Ankerabstand A auf Null reduziert. Ist die Entfernung zwischen der Stirnseite der Spuleneinheit 41 und der Stirnseite des zweiten Teilankers 22 soweit reduziert, dass diese der Differenz aus dem Ankerabstand und dem Verschiebespiel B entspricht, kommt der erste Teilanker 22 mit der Begrenzung 40 zur Anlage an den zweiten Teilanker 23. Damit ist der Teilankerhub H₁ oder Leerhub in dem Verfahrensschritt 48 abgeschlossen. Während dieses Teilankerhubs H₁ erfolgt eine Relativbewegung zwischen den Teilankern 22, 23 ohne Bewegung des Ventilkörpers 15.

Hieran schließt in einem Verfahrensschritt 49 ein Teilankerhub H₂ an, während dessen die Teilanker 22, 23 ohne Relativbewegung gemeinsam infolge der wirkenden Magnetkraft bewegt werden, wobei die Teilanker 22, 23 während des Teilankerhubs H₂ aneinander anliegen und der Ventilkörper 15 mitbewegt wird. Der Teilankerhub H₂ stellt eine erste Teilöffnungsbewegung in eine erste Öffnungsstellung dar, für welche ein verringerter Übertrittsquerschnitt zwischen dem Ventilteller 18 und dem Ventilsitz 16 geschaffen wird. Am Ende dieser Teilöffnungsbewegung und des Teilankerhub H₂ ist der erste Öffnungsquerschnitt gemäß Fig. 3 erreicht. Während dieser ersten Öffnungsbewegung wirkt die Begrenzung 40 als eine Art "Mitnehmer", über den der erste Teilanker 22 den zweiten Teilanker 23 mitnimmt und damit die erste Teilöffnungsbewegung herbeiführt. Da mit der Teilöffnungsbewegung bereits ein geringer Übertrittsquerschnitt geschaffen wird, erfolgt ein Druckausgleich zwischen dem Druck in der Primärleitung 12 und in der Sekundärleitung 13, womit zunehmend die von dem Druck in der Primärleitung auf den Ventilkörper 15 ausgeübte Fluidkraft kompensiert wird durch eine infolge des Drucks in der Sekundärleitung 13 wirkende entgegengesetzte Fluidkraft.

Soll in einem Verfahrensschritt 50 das Ventil 14 von der ersten Öffnungsstellung mit einer zweiten Öffnungsbewegung in eine zweite Öffnungsstellung gemäß Fig. 4 überführt werden, muss dazu der Elektromagnet 44 lediglich hinreichende Magnetkräfte erzeugen, um die Schließfeder 19 (und ggf. eine verbleibende Rest-Fluidkraft) zu überwinden. Während dieser zweiten Öffnungsbewegung über den Teilankerhub H₃ verbleibt der erste Teilanker 22 in der an der Spuleneinheit 41 anliegenden Stellung, während sich der zweite Teilanker in Richtung der Spuleneinheit 41 bewegt und von der Begrenzung 40 entfernt, womit der Abstand zwischen den Teilankerplatten 27, 29 zunehmend verringert wird. In der zweiten Öffnungsstellung gemäß Fig. 4 liegen die Teilankerplatten 27, 29 aneinander an und das Ventil 14 hat seine zweite Öffnungsstellung erreicht, die die maximale Öffnungsstellung ist.

Soll zu einem späteren Zeitpunkt, unter Umständen auch im Rahmen einer Pulsweitenmodulation, das Ventil 14 wieder in die Schließstellung überführt werden, wird in einem Verfahrensschritt 51 die Bestromung der Spule 42 beseitigt. Dies hat zur Folge, dass die Schließfeder 19 das Ventil 14 wieder schließen kann. Hierbei werden die zuvor erläuterten Bewegungsvorgänge umgekehrt: Die Schließfeder 19 bewegt zunächst lediglich den Ventilkörper 15 und den zweiten Teilanker 23, womit sich die Teilankerplatten 27, 29 wieder voneinander entfernen. Kommt der zweite Teilanker 23 zur Anlage an die Begrenzung 40, nimmt der erste Teilanker 23 den ersten Teilanker 22 mit, bis die Schließstellung gemäß Fig. 2 wieder erreicht ist. Erfolgt eine alternierende Öffnung und Schließung des Ventils 14, insbesondere für eine Pulsweitenmodulation, können sich die erläuterten Verfahrensschritte 46 bis 51 wiederholen.

Hinsichtlich weiterer Ausgestaltungsmöglichkeiten, konstruktiver Details, Funktionen, fluidischer Bauelemente, Sensoren, Überwachungsmöglichkeiten, Steuerungs- oder Regelungsmöglichkeiten bei einer agraren Ausbringeinrichtung 1, einer Feldspritzeneinrichtung 4 oder eine Agrarspritzenventileinheit 5 wird insbesondere auf den eingangs angeführten Stand der Technik verwiesen. So kann beispielsweise die Agrarspritzen-Ventileinheit auch eine integrierte Überströmfunktion aufweisen (s. EP 2 979 765 B1).

Für das dargestellte Ausführungsbeispiel war das Ventil 14 mittels einer Schließfeder 14 in eine Schließstellung beaufschlagt und die Öffnung des Ventils 14 erfolgte gegen den Druck in der Primärleitung 12, wobei hier der Elektromagnet 44 für die Erzeugung einer Öffnungskraft verantwortlich war. Das erfindungsgemäße Prinzip mit dem Einsatz eines zweiteiligen Ankers 21 kann aber auch im Zusammenhang mit beliebigen anderweitigen Ventilkonzepten Einsatz finden, also beispielsweise für einen Elektromagneten, der eine Schließkraft erzeugt, während eine Öffnungskraft von einer Öffnungsfeder wirkt, und/oder ein Ventil, welches mit dem Druck in der Primärleitung geöffnet wird.

### BEZUGSZEICHENLISTE

- 1: agrare Ausbringeinrichtung
- 2: Sammelleitung
- 3: Ausbringleitung
- 4: Feldspritzeneinrichtung
- 5: Agrarspritzen-Ventileinheit
- 6: Düse
- 7: Ausbringöffnung
- 8: Sprühkegel
- 9: Primärleitungs-Eingangsanschluss
- 10: Sekundärleitungs-Ausgangsanschluss
- 11: elektronischer Steueranschluss und/oder Leistungsversorgungsanschluss
- 12: Primärleitung
- 13: Sekundärleitung
- 14: Ventil
- 15: Ventilkörper
- 16: Ventilsitz
- 17: Ventilkörperstange
- 18: Ventilteller
- 19: Schließfeder
- 20: Gehäuse
- 21: Anker
- 22: (erster) Teilanker
- 23: (zweiter) Teilanker
- 24: Bohrung
- 25: Vertikalschenkel
- 26: Horizontalschenkel
- 27: Teilankerplatte
- 28: Grundschenkel
- 29: Teilankerplatte
- 30: Seitenschenkel
- 31: Hülse
- 32: Innenraum
- 33: Bohrung
- 34: Führungshülse
- 35: Führung
- 36: Ausnehmung
- 37: Umfangsnut
- 38: Anschlag
- 39: Sicherungsring
- 40: Begrenzung
- 41: Spuleneinheit
- 42: Spule
- 43: Kern
- 44: Elektromagnet
- 45: Haftmagnet
- 46: Verfahrensschritt
- 47: Verfahrensschritt
- 48: Verfahrensschritt
- 49: Verfahrensschritt
- 50: Verfahrensschritt
- 51: Verfahrensschritt
- 52: Innenfläche

## Patentansprüche

1. Agrarspritzen-Ventileinheit (5) mit
a) einer Primärleitung (12) und einer Sekundärleitung (13),
b) einem Ventil (14), welches
ba) zwischen der Primärleitung (12) und der Sekundärleitung (13) angeordnet ist und
bb) einen Ventilsitz (16) und einen Ventilkörper (15) aufweist, wobei der Ventilkörper (15) durch einen Elektromagneten (44) über einen Ventilhub H zwischen einer Öffnungsstellung, in der das Ventil (14) die Primärleitung (12) mit der Sekundärleitung (13) verbindet, und einer Schließstellung, in der das Ventil (14) die Primärleitung (12) gegenüber der Sekundärleitung (13) absperrt, bewegbar ist,
c) wobei der Elektromagnet (44) eine Spuleneinheit (41) und einen Anker (21) aufweist,
d) der Anker (21) einen ersten Teilanker (22) und einen zweiten Teilanker (23) aufweist, wobei der zweite Teilanker (23) antriebsfest mit dem Ventilkörper (15) gekoppelt ist, während der erste Teilanker (22) bis zum Erreichen einer Begrenzung (40) relativ gegenüber dem zweiten Teilanker (23) bewegbar ist, so dass die Teilanker (22, 23)
da) in einem Teilankerhub H₂ gemeinsam bewegt werden und
db) in mindestens einem anderen Teilankerhub H₁, H₃ relativ zueinander bewegt werden.

2. Agrarspritzen-Ventileinheit (5) nach Anspruch 1, wobei die Teilanker (22, 23) über eine die Begrenzung (40) aufweisende Linearführung miteinander verbunden sind.

3. Agrarspritzen-Ventileinheit (5) nach Anspruch 1 oder 2, wobei die Begrenzung (40) ein Anschlag (38) ist.

4. Agrarspritzen-Ventileinheit (5) nach einem der vorhergehenden Ansprüche, wobei der erste Teilanker (22) einen U-förmigen Querschnitt aufweist und der zweite Teilanker (23) zwischen Seitenschenkeln (30) des U-förmigen Querschnitts des ersten Teilankers (22) angeordnet ist.

5. Agrarspritzen-Ventileinheit (5) nach Anspruch 4, wobei die Begrenzung (40) von einem Seitenschenkel (30) des U-förmigen Querschnitts des ersten Teilankers (22) ausgebildet ist oder an diesem gehalten ist.

6. Agrarspritzen-Ventileinheit (5) nach einem der vorhergehenden Ansprüche, wobei der Ventilkörper (15) des Ventils (14) über eine Schließfeder (19) in Schließrichtung in Richtung des Ventilsitzes (16) in die Schließstellung beaufschlagt ist und der Ventilkörper (15) des Ventils (14) durch eine Bestromung des Elektromagneten (44) von der Schließstellung in die Öffnungsstellung überführbar ist.

7. Agrarspritzen-Ventileinheit (5) nach einem der vorhergehenden Ansprüche, wobei die Teilanker (22, 23) jeweils eine Teilankerplatte (27, 29) aufweisen, wobei eine Dicke der der Spuleneinheit (41) zugewandten ersten Teilankerplatte (29) 10% bis 40 % der Dicke der der Spuleneinheit (41) abgewandten zweiten Teilankerplatte (27) beträgt.

8. Agrarspritzen-Ventileinheit (5) nach einem der vorhergehenden Ansprüche, wobei
a) in der Schließstellung die beiden Teilanker (22, 23) unmittelbar aneinander anliegen, wobei
aa) der erste Teilanker (22), der auf der der Spuleneinheit (41) zugewandten Seite angeordnet ist, einen Ankerabstand A von der Spuleneinheit (41) aufweist und
ab) die Begrenzung (40) ein begrenztes Verschiebespiel B für eine begrenzte Relativverschiebung des zweiten Teilankers (23) gegenüber dem ersten Teilanker (22) vorgibt,
und
b) das begrenzte Verschiebespiel B kleiner ist als der Ankerabstand A.

9. Agrarspritzen-Ventileinheit (5) nach Anspruch 8, wobei das begrenzte Verschiebespiel B mindestens 70 % des Ankerabstandes A ist.

10. Agrarspritzen-Ventileinheit (5) nach Anspruch 8 oder 9, wobei der Ankerabstand A dem Ventilhub H entspricht.

11. Agrarspritzen-Ventileinheit (5) nach einem der vorhergehenden Ansprüche, wobei der Elektromagnet (44) ein Haftmagnet (45) ist.

12. Agrarspritzen-Ventileinheit (5) nach einem der vorhergehenden Ansprüche, wobei eine Steuereinrichtung mit Steuerlogik vorhanden ist, welche den Elektromagneten (44) zur Herbeiführung einer Pulsweitenmodulation ansteuert.

13. Feldspritzeneinrichtung (4) mit einer Agrarspritzen-Ventileinheit (5) nach einem der Ansprüche 1 bis 12.

14. Agrare Ausbringeinrichtung (1) mit mehreren Feldspritzeneinrichtungen (4a, 4b, ...) nach Anspruch 13.

15. Verfahren zum Betrieb einer Agrarspritzen-Ventileinheit (5) nach einem der Ansprüche 1 bis 12, zum Betrieb einer Feldspritzeneinrichtung (4) nach Anspruch 13 oder zum Betrieb einer agraren Ausbringeinrichtung (1) nach Anspruch 14, wobei
a) der Ventilkörper (15) durch die Schließfeder (19) in die Schließstellung beaufschlagt wird,
b) der Elektromagnet (44) bestromt wird, wobei
ba) in einer ersten Bestromungsphase der erste Teilanker (22) über einen Teilankerhub H₁, der dem Verschiebespiel B entspricht, in Richtung der Spuleneinheit (41) bewegt wird, ohne dass der zweite Teilanker (23) und damit der Ventilkörper (15) mitbewegt werden, so dass sich der Abstand der Teilanker (22, 23) von Null auf einen Abstand, der dem Verschiebespiel B entspricht, vergrößert und das Ventil (14) weiterhin in der Schließstellung verbleibt, und
bb) in einer zweiten Bestromungsphase die beiden Teilanker (22, 23) mit einem Abstand voneinander, der dem Verschiebespiel B entspricht, gemeinsam über einen Teilankerhub H₂ bewegt werden, womit das Ventil (14) von der Schließstellung in einer erste Öffnungsstellung überführt wird, und
bc) in einer dritten Bestromungsphase der Abstand der Teilanker (22, 23) bei ruhendem ersten Teilanker (22) durch Bewegung des zweiten Teilankers (23) und damit des Ventilkörpers (15) über eine Teilankerhub H₃ von einem Abstand, der dem Verschiebespiel B entspricht, auf null reduziert wird, wodurch das Ventil (14) von der ersten Öffnungsstellung in einer zweite Öffnungsstellung überführt wird.

## Claims

1. Agricultural spray valve unit (5) comprising
a) a primary line (12) and a secondary line (13),
b) a valve (14) which
ba) is arranged between the primary line (12) and the secondary line (13) and
bb) comprises a valve seat (16) and a valve body (15), wherein the valve body (15) can be moved by an electromagnet (44) with a valve displacement H between an open position wherein the valve (14) connects the primary line (12) to the secondary line (13) and a closed position wherein the valve (14) separates the primary line (12) from the secondary line (13),
c) the electromagnet (44) comprising a coil unit (41) and an armature (21),
d) the armature (21) comprising a first armature part (22) and a second armature part (23), the second armature part (23) being coupled by a driving connection to the valve body (15), whereas the first armature part (22) can be moved relatively to the second armature part (23) until reaching a limitation (40) so that the armature parts (22, 23)
da) are moved together in an armature displacement part H₂ and
db) are moved relatively to each other in at least another armature displacement part H₁, H₃.

2. Agricultural spray valve unit (5) of claim 1, wherein the armature parts (22, 23) are connected to each other by a linear guide comprising the limitation (40).

3. Agricultural spray valve unit (5) of claim 1 or 2, wherein the limitation (40) is a stop (38).

4. Agricultural spray valve unit (5) of one of the preceding claims, wherein the first armature part (22) comprises an U-shaped cross section and the second armature part (23) is arranged between side legs (30) of the U-shaped cross section of the first armature part (22).

5. Agricultural spray valve unit (5) of claim 4, wherein the limitation (40) is formed by or held by one side leg (30) of the U-shaped cross section of the first armature part (22).

6. Agricultural spray valve unit (5) of one of the preceding claims, wherein the valve body (15) of the valve (14) is biased by a closing spring (19) in closing direction towards the valve seat (16) into the closed position and the valve body (15) of the valve (14) can be transferred from the closed position into the open position by energising the electromagnet (14).

7. Agricultural spray valve unit (5) of one of the preceding claims, wherein the armature parts (22, 23) each comprise an armature part plate (27, 29), the thickness of the first armature part plate (29) facing towards the coil unit (41) being 10% to 40% of the thickness of the second armature part plate (27) facing away from the coil unit (41).

8. Agricultural spray valve unit (5) of one of the preceding claims, wherein
a) in the closed position the two armature parts (22, 23) directly contact each other, wherein
aa) the first armature part (22) being arranged on the side facing towards the coil unit (41) comprises an armature distance A from the coil unit (41) and
ab) the limitation (40) defines a limited a displacement play B for a limited relative displacement of the second armature part (23) relative to the first armature part (22)
and
b) the limited displacement play B is smaller than the armature distance A.

9. Agricultural spray valve unit (5) of claim 8, wherein the limited displacement play B is at least 70 % of the armature distance A.

10. Agricultural spray valve unit (5) of claim 8 or 9, wherein the armature distance A corresponds to or equals the valve displacement H.

11. Agricultural spray valve unit (5) of one of the preceding claims, wherein the electromagnet (44) is an electromagnetic clamp or contact electromagnet or Haftmagnet.

12. Agricultural spray valve unit (5) of one of the preceding claims, wherein a control device comprising control logic is provided which controls the electromagnet (44) for inducing a pulse width modulation.

13. Field spray apparatus (4) comprising an agricultural spray valve unit of one claims 1 to 12.

14. Agricultural dispensing apparatus (1) comprising a plurality of field spray apparatuses (4a, 4b,...) of claim 13.

15. Method for operating an agricultural spray valve unit (5) of one of claims 1 to 12, for operating a field spay apparatus (4) of claim 13 or for operating an agricultural dispensing apparatus (1) of claim 14, wherein
a) the valve body (15) is biased by the closing spring (19) into the closed position,
b) the electromagnet (44) is energised wherein
ba) in a first energizing phase the first armature part (22) is moved with an armature displacement part H₁ which corresponds to the displacement play B towards the spool unit (41) without a corresponding movement of the second armature part (23) and so the valve body (15) so that the distance of the armature parts (22, 23) increases from zero to a distance corresponding to a displacement play B and the valve (14) still remains in the closed position and
bb) in a second energizing phase the two armature parts (22, 23) are moved together with an armature displacement part H₂ wherein the armature parts (22, 23) have a distance from each other corresponding to the displacement play B, in this way the valve (14) being transferred from the closed position into a first open position and
bc) in a third energizing phase the distance of the armature parts (22, 23) is decreased from a distance corresponding to the displacement play B to zero by a movement of the second armature part (23) and so the valve body (15) with an armature displacement part H₃ wherein the first armature part (22) does not move so that the valve (14) is transferred from the first open position into a second open position.

## Revendications

1. Unité de soupape de pulvérisation agricole (5), avec
a) une conduite primaire (12) et une conduite secondaire (13),
b) avec une soupape (14), laquelle
ba) est disposée entre la conduite primaire (12) et la conduite secondaire (13), et
bb) présente un siège de soupape (16) et un corps de soupape (15), le corps de soupape (15) pouvant être déplacé par un électroaimant (44) par le biais d'une levée de soupape H entre une position d'ouverture, dans laquelle la soupape (14) raccorde la conduite primaire (12) à la conduite secondaire (13), et une position de fermeture dans laquelle la soupape (14) ferme la conduite primaire (12) par rapport à la conduite secondaire (13),
c) l'électroaimant (44) présentant une unité de bobine (41) et un induit (21),
d) l'induit (21) présentant un premier induit partiel (22) et un deuxième induit partiel (23), le deuxième induit partiel (23) étant couplé, solidaire en entraînement, au corps de soupape (15) tandis le premier induit partiel (22) peut être déplacé jusqu'à atteindre une limitation (40) relativement au deuxième induit partiel (23) de sorte que les induits partiels (22, 23)
da) sont déplacés conjointement dans une levée d'induit partiel H₂ et
db) sont déplacés dans au moins une autre levée d'induit partiel H₁, H₃ l'un par rapport à l'autre.

2. Unité de soupape de pulvérisation agricole (5) selon la revendication 1, les induits partiels (22, 23) étant connectés l'un à l'autre par le biais d'un guide linéaire présentant la limitation (40).

3. Unité de soupape de pulvérisation agricole (5) selon la revendication 1 ou 2, la limitation (40) étant une butée (38).

4. Unité de soupape de pulvérisation agricole (5) selon l'une des revendications précédentes, le premier induit partiel (22) présentant une section transversale en forme de U, et le deuxième induit partiel (23) étant disposé entre des branches latérales (30) de la section transversale en forme de U du premier induit partiel (22).

5. Unité de soupape de pulvérisation agricole (5) selon la revendication 4, la limitation (40) étant constituée d'une branche latérale (30) de la section transversale en forme de U du premier induit partiel (22) ou étant maintenue sur celle-ci.

6. Unité de soupape de pulvérisation agricole (5) selon l'une des revendications précédentes, le corps de soupape (15) de la soupape (14) étant, par le biais d'un ressort de fermeture (19), poussé dans la position de fermeture en direction du siège de soupape (16), et le corps de soupape (15) de la soupape (14) pouvant être transféré de la position de fermeture dans la position d'ouverture par une alimentation en courant de l'électroaimant (44).

7. Unité de soupape de pulvérisation agricole (5) selon l'une des revendications précédentes, les induits partiels (22, 23) présentant respectivement une plaque d'induit partiel (27, 29), une épaisseur de la première plaque d'induit (29) tournée vers l'unité de bobine (41) représentant 10% à 40% de l'épaisseur de la deuxième plaque d'induit (27) éloignée de l'unité de bobine (41).

8. Unité de soupape de pulvérisation agricole (5) selon l'une des revendications précédentes
a) les deux induits partiels (22, 23) étant directement contigus dans la position de fermeture,
aa) le premier induit partiel (22), qui est disposé sur le côté tourné vers l'unité de bobine (41), présentant une distance d'induit A à l'unité de bobine (41), et
ab) la limitation (40) occasionnant un jeu de fermeture B limité pour un déplacement relatif limité du deuxième induit partiel (23) vis-à-vis du premier induit partiel (22),
et
b) le jeu de fermeture B limité étant plus petit que la distance d'induit A.

9. Unité de soupape de pulvérisation agricole (5) selon la revendication 8, le jeu de fermeture B limité représentant au moins 70% de la distance d'induit A.

10. Unité de soupape de pulvérisation agricole (5) selon la revendication 8 ou 9, la distance d'induit A correspondant à la levée de soupape (H).

11. Unité de soupape de pulvérisation agricole (5) selon l'une des revendications précédentes, l'électroaimant (44) étant un aimant de maintien (45).

12. Unité de soupape de pulvérisation agricole (5) selon l'une des revendications précédentes, un dispositif de commande muni d'une logique de commande étant présent, qui pilote l'électroaimant (44) afin de susciter une modulation de largeur d'impulsions.

13. Dispositif de pulvérisation agricole (4) muni d'une unité de soupape de pulvérisation agricole (5) selon l'une des revendications 1 à 12.

14. Dispositif d'épandage agricole (1) muni de plusieurs dispositifs de pulvérisation agricole (4a, 4b, ...) selon la revendication 13.

15. Procédé de fonctionnement d'une unité de soupape de pulvérisation agricole (5) selon l'une des revendications 1 à 12, destiné au fonctionnement d'un dispositif de pulvérisation agricole (4) selon la revendication 13 ou au fonctionnement d'un dispositif d'épandage agricole (1) selon la revendication 14,
a) le corps de soupape (15) étant poussé dans la direction de fermeture par le ressort de fermeture (19),
b) l'électroaimant (44) étant alimenté en courant,
ba) le premier induit partiel (22) étant, dans une première phase d'alimentation en courant, déplacé en direction de l'unité de bobine (41) par le biais d'une levée d'induit partiel H₁ qui correspond au jeu de déplacement B sans que le deuxième induit partiel (23) et donc le corps de soupape (15) soit déplacé en même temps de telle sorte que la distance des induits partiels (22, 23) augmente de zéro à une distance qui correspond au jeu de déplacement B, et la soupape (14) continue à demeurer dans la position de fermeture, et
bb) dans une deuxième phase d'alimentation en courant, les deux induits partiels (22, 23) sont, avec une distance entre eux qui correspond au jeu de déplacement B, déplacés conjointement par le biais d'une levée d'induit partiel H₂, ce qui fait que la soupape (14) passe de la position de fermeture à une première position d'ouverture, et
bc) dans une troisième phase d'alimentation en courant, la distance des induits partiels (22, 23) est, quand le premier induit partiel (22) est immobile, réduite à zéro par le déplacement du deuxième induit partiel (23) et donc du corps de soupape (15), par le biais d'une levée d'induit partiel H₃, en partant d'une distance qui correspond au jeu de déplacement B, ce qui fait que la soupape (14) passe d'une première position d'ouverture à une deuxième position d'ouverture.
